# EUROPEAN PATENT SPECIFICATION

(11) **EP 3 182 631 B1**
(45) Date of publication and mention of the grant of the patent: **14.11.2018**
(21) Application number: 14899819.8
(22) Date of filing: 08.12.2014
(51) Int. Cl.: H04L 5/00, H04L 5/14, H04B 1/00

(54) **CARRIER AGGREGATION DEVICE**
TRÄGERAGGREGATIONSVORRICHTUNG
DISPOSITIF D'AGRÉGATION DE PORTEUSES

(30) Priority: 15.08.2014 CN 201410404889
(43) Date of publication of application: 21.06.2017
(73) Proprietor: Sanechips Technology Co., Ltd., Shenzhen, Guangdong 518055 (CN)
(72) Inventor: LIU, Haiguang, Shenzhen Guangdong 518085 (CN)
(74) Representative: Gevers Patents
(86) International application number: PCT/CN2014/093225
(87) International publication number: WO 2016/023309

(56) References cited:
- EP-A2- 2 615 764
- WO-A1-2013/152334
- CN-A- 103 001 908
- CN-A- 103 338 050
- CN-A- 103 780 280
- US-A1- 2013 231 064
- QUALCOMM EUROPE: "UE Implementation Impact due to Dual-Band DC-HSDPA Operation", 3GPP DRAFT; R4-091218, 19 March 2009 (2009-03-19), XP050342000, Seoul, Korea [retrieved on 2009-03-19]

## Description

### TECHNICAL FIELD

The disclosure relates to the field of multimode mobile communications, and in particular to a carrier aggregation device.

### BACKGROUND

Along with the arrival of the fourth generation of the mobile communications technology (4G), in order to support higher rate, the 3rd generation partnership project (3GPP) proposes a senior long-term evolution advance (LTE-A), which is capable of supporting more bandwidth combinations, realizing resource integration, improving the data service rate, and the data rate is significantly improved through carrier aggregation particularly when the frequency band resource is limited. Currently existed terminal carrier aggregation technology is commonly the combination of a low frequency band and a high frequency band, which is capable of realizing continuous carrier aggregation (Intra-CA) in band, the current carrier aggregation solution for a low, an intermediate and a high frequency band is based on a 4-antenna architecture, but the 4-antenna carrier aggregation is almost not realizable for a terminal.

US-A-2013/0231064 relates to single-chip signal splitting carrier aggregation receiver architecture. However, it is not effective to realize the 4-antenna carrier aggregation for a terminal.

EP-A-2615764 relates to carrier aggregation apparatus. However, it is not effective to realize the 4-antenna carrier aggregation for a terminal.

### SUMMARY

In view of the above, embodiments of the disclosure are intended to provide a carrier aggregation device.

An embodiment of the disclosure provides a carrier aggregation device, the device is defined in independent claim 1 and further detailed in the dependent claims.

The present invention is defined by the scope of the appended claims.

In the following, any embodiment(s) referred to and not falling within the scope of said appended claims is (are) to be interpreted as example(s) useful for understanding the present invention.

According to the embodiments of the disclosure, a carrier aggregation device is provided, including: a first transceiver antenna, a second transceiver antenna, a first radio-frequency front end, a second radio-frequency front end and a radio-frequency transceiver chip; wherein, a signal received by the first transceiver antenna is split into a high frequency signal, an intermediate frequency signal and a low frequency signal through the first radio-frequency front end, and the three signals separately enter the radio-frequency transceiver chip; and a signal received by the second transceiver antenna is split into a high frequency signal, an intermediate frequency signal and a low frequency signal through the second radio-frequency front end, and the three signals separately enter the radio-frequency transceiver chip. Therefore, a double-antenna carrier aggregation device can be achieved. Compared with the related art, two antennas are omitted, the layout area of a printed circuit board (PCB) is reduced while the interference is reduced, and accordingly, the product manufacturing cost is greatly reduced.

### BRIEF DESCRIPTION OF THE DRAWINGS

Fig. 1 is a basic structural diagram of a carrier aggregation device in the related art;
Fig. 2 is a basic structural diagram 1 of a carrier aggregation device of the disclosure;
Fig. 3 is a basic structural diagram 2 of a carrier aggregation device of the disclosure;
Fig. 4 is a basic structural diagram 3 of a carrier aggregation device of the disclosure.

### DETAILED DESCRIPTION

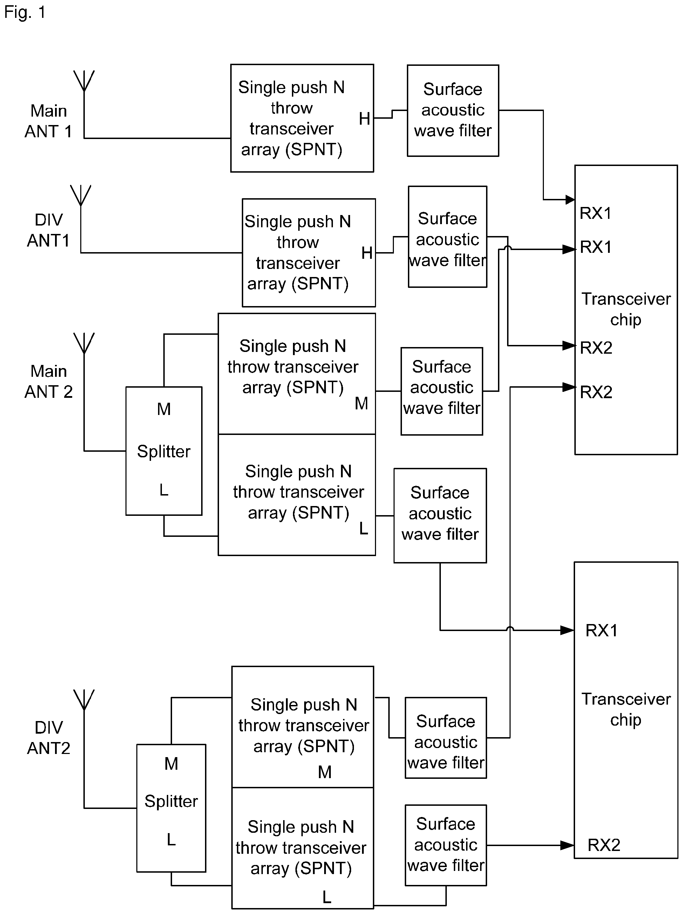

In a traditional carrier aggregation device covering low, intermediate and high frequencies, the radio-frequency front end includes fourth antennas for achieving main reception and diversity reception of a main-auxiliary carrier in carrier aggregation respectively. Fig. 1 is a basic structural diagram of a traditional four-antenna carrier aggregation device. The structure of the traditional carrier aggregation device is described below with reference to Fig. 1.

A signal enters a carrier aggregation device through a transceiver antenna port (Main ANT1 and DIV ANT1), then enters a radio-frequency transceiver chip through a radio-frequency front end (including a front-stage radio-frequency antenna switch, a filter etc.). For example, the front-stage radio-frequency antenna switch in Fig. 1 uses a single push N throw (SPNT) transceiver array, the filter uses a surface acoustic wave filter (SAWF), the Main ANT1 and the DIV ANT1 are mainly used in main and diversity reception of a high frequency band respectively. Then, a signal output by the transceiver chip, after digital processing such as analog/digital (A/D) conversion etc., is output to a baseband chip. Thereby, the receiving and processing of the high frequency band radio-frequency signal are achieved.

Similarly, a signal enters a carrier aggregation device through antenna ports (MAIN ANT2 and DIV ANT2), the signal is split into low and intermediate frequency signals through low and intermediate frequency diplexers, and the two signals enter two radio-frequency transceivers respectively through radio-frequency front ends (including a front-end radio-frequency antenna switch, a filter etc.). For example, the front-end radio-frequency antenna switch in Fig. 1 uses a SPNT transceiver array, the filter uses a SAW filter, the MAIN ANT2 and the DIV ANT2 are mainly used in main and diversity reception of low and intermediate frequencies, respectively. A signal output by the transceiver, after digital processing such as A/D conversion etc., is output to the baseband chip, and thereby the receiving and processing of the low and intermediate frequency band radio-frequency signals are achieved.

In an embodiment of the disclosure, a carrier aggregation device is provided, the device includes: a first transceiver antenna, a second transceiver antenna, a first radio-frequency front end, a second radio-frequency front end and a radio-frequency transceiver chip.

A signal received by the first transceiver antenna is split into a high frequency signal, an intermediate frequency signal and a low frequency signal through the first radio-frequency front end, and the three signals separately enter the radio-frequency transceiver chip; a signal received by the second transceiver antenna is split into a high frequency signal, an intermediate frequency signal and a low frequency signal through the second radio-frequency front end, and the three signals separately enter the radio-frequency transceiver chip.

The disclosure is further described below with reference to drawings and embodiments.

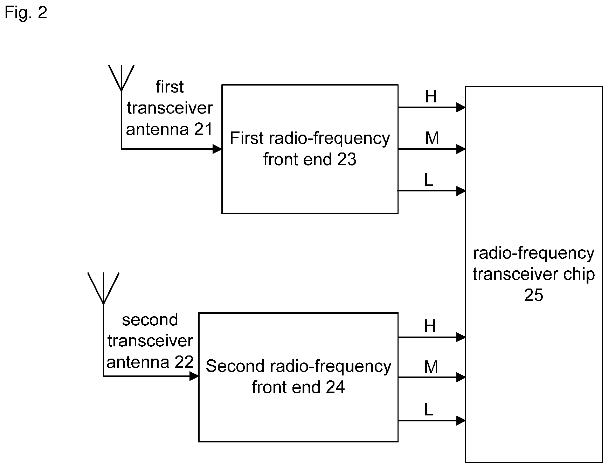

The first embodiment of the disclosure provides a carrier aggregation device, as shown in Fig. 2. The device includes: a first transceiver antenna 21, a second transceiver antenna 22, a first radio-frequency front end 23, a second radio-frequency front end 24 and a radio-frequency transceiver chip 25; wherein, a signal received by the first transceiver antenna 21 is split into a high frequency signal (the signal labeled as H in the figure), an intermediate frequency signal ((the signal labeled as M in the figure) and a low frequency signal ((the signal labeled as L in the figure) through the first radio-frequency front end 23, and the three signals separately enter the radio-frequency transceiver chi 25; a signal received by the second transceiver antenna 22 is split into a high frequency signal ((the signal labeled as H in the figure), an intermediate frequency signal ((the signal labeled as M in the figure) and a low frequency signal (signal marked with L in the figure) through the second radio-frequency front end 24, and the three signals separately enter the radio-frequency transceiver chip.

The first radio-frequency front end 23 includes a first duplexer connected to the first transceiver antenna 21. The first duplexer is arranged to split the signal, received from the first transceiver antenna 21, into a first signal including the low frequency signal and a second signal including the intermediate frequency signal and the high frequency signal.

The second frequency front end 24 includes a second duplexer connected to the second transceiver antenna 22; the second duplexer is arranged to split the signal, received from the second transceiver antenna 22, into a third signal including the low frequency signal and a fourth signal including the intermediate frequency signal and the high frequency signal.

The first radio-frequency front end 23 may further include: a first energy diversity device and a first antenna switch. A low frequency output end of the first duplexer is connected to a low frequency receiving port of the first antenna switch; intermediate and high frequency output ends of the first duplexer are connected to the first antenna switch through the first energy diversity device; the first energy diversity device is arranged to receive the second signal sent by the first duplexer, execute frequency division processing on the second signal and send two signals obtained after the frequency division processing on the second signal to the first antenna switch.

The second radio-frequency front end 24 may further includes a second energy diversity device and a second antenna switch. A low frequency output end of the second duplexer is connected to a low frequency receiving port of the second antenna switch; intermediate and high frequency output ends of the second duplexer are connected to the second antenna switch through the second energy diversity device; the second energy diversity device is arranged to receive the fourth signal sent by the second duplexer, execute frequency division processing on the fourth signal and send two signals obtained after the frequency division processing on the fourth signal to the second antenna switch.

The first energy diversity device may be arranged to split the received second signal into a fifth signal including an intermediate frequency and a sixth signal including a high frequency; and the second energy diversity device is arranged to split the received fourth signal into a seventh signal including an intermediate frequency and an eighth signal including a high frequency.

A high frequency output end of the first energy diversity device may be connected to a high frequency receiving port of the first antenna switch; and an intermediate frequency output end of the first energy diversity device may be connected to an intermediate frequency receiving port of the first antenna switch.

A high frequency output end of the second energy diversity device may be connected to a high frequency receiving port of the second antenna switch; and an intermediate frequency output end of the second energy diversity device may be connected to an intermediate frequency receiving port of the second antenna switch.

The first energy diversity device may be a diplexer or a low noise amplifier (LNA); and the second energy diversity device may be a diplexer or a LNA.

The first radio-frequency front port May further include: a first filter, a second filter and a third filter.

The first signal, after passing through the first antenna switch, passes through the first filter for clutter filtering and then is output to the radio-frequency transceiver chip.

The fifth signal, after passing through the first antenna switch, passes through the second filter for clutter filtering and then is output to the radio-frequency transceiver chip.

The sixth signal, after passing through the first antenna switch, passes through the third filter for clutter filtering and then is output to the radio-frequency transceiver chip.

The second radio-frequency front port May further include: a fourth filter, a fifth filter and a sixth filter.

The third signal, after passing through the second antenna switch, passes through the fourth filter for clutter filtering and then is output to the radio-frequency transceiver chip.

The seventh signal, after passing through the second antenna switch, passes through the fifth filter for clutter filtering and then is output to the radio-frequency transceiver chip.

The eighth signal, after passing through the second antenna switch, passes through the sixth filter for clutter filtering and then is output to the radio-frequency transceiver chip.

Those skilled in the art can understand that actually the first filter, the second filter, the third filter, the fourth filter, the fifth filter and the sixth filter may be integrated in a filter, or are at two, three, four, five filters as desired.

The carrier aggregation device of the disclosure is further described below with reference to two embodiments.

### Embodiment 1

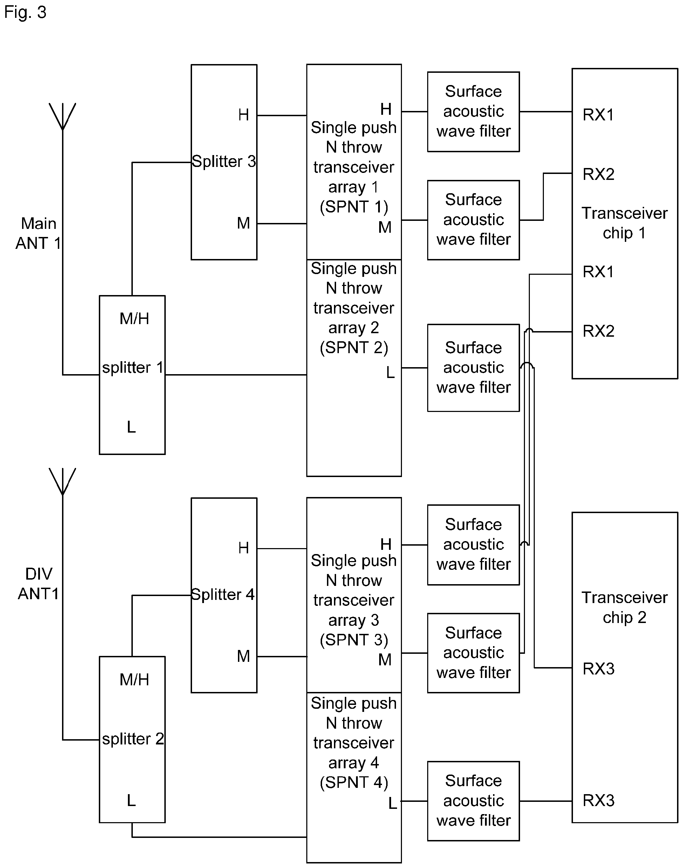

Fig. 3 is a structural diagram of a carrier aggregation device of the disclosure. As shown in Fig. 3, a signal enters a carrier aggregation device through transceiver antennas (Main ANT and DIV ANT), then enters a radio-frequency transceiver chip through a radio-frequency front end; the radio-frequency front end includes a diplexer, an antenna switch and a filter. For example, the front-end radio-frequency antenna switch in Fig. 3 uses a SPNT transceiver array, the filter uses a SAW filter, the Main ANT and the DIV ANT achieve main and diversity reception respectively of a high frequency band, an intermediate frequency band and a low frequency band. As shown in Fig. 3, a signal, after entering the Main ANT, is split into a low frequency signal, and an intermediate and high frequency mixed signal through a diplexer 1. The low frequency signal is directly connected to a low frequency signal receiving port (port L) of a SPNT2. The intermediate and high frequency mixed signal is split into a high frequency signal and a low frequency signal through a diplexer 3. Then, the two signals are connected to a high frequency receiving port (port H) and a low frequency receiving port (port M) of a SPNT 1 respectively. Thus, the signal passing through the Main ANT is finally split into three signals (a low frequency signal, an intermediate frequency signal and a high frequency signal), the three signals, after clutter filtering process by the filter, enter a high frequency receiving port (Rx1), an intermediate frequency receiving port (Rx2) of the transceiver 1 and a low frequency receiving port (Rx3) of the transceiver 2 respectively.

Similarly, a signal, after entering the DIV ANT, is split into a low frequency signal, and an intermediate and high frequency mixed signal through the diplexer 2. The low frequency signal is directly connected to a low frequency signal receiving port (port L) of a SPNT4. The intermediate and high frequency mixed signal is split into a high frequency signal and a low frequency signal through the diplexer 3. Then the two signals are connected to a high frequency receiving port (port H) and a low frequency receiving port (port M) of the SPNT 3 respectively. Thus, the signal, passing through the Main ANT, is finally split into three signals (a low frequency signal, an intermediate frequency signal and a high frequency signal). The three signals, after clutter filtering process by the filter, enter a high frequency receiving port (Rx1), an intermediate frequency receiving port (Rx2) of the transceiver 1 and a low frequency receiving port (Rx3) of the transceiver 2 respectively.

In the embodiment, the diplexer 3 and the diplexer 4 have characteristics of single-input and double-output of intermediate and high frequency signals, for the purpose of dividing an intermediate and high frequency signal into two signals which enter two receiving channels respectively, to ensure that the intermediate and high frequency bands are multiplexed in one channel to implement the carrier aggregation function of low, intermediate and high frequency bands. Compared with the related art, the solution of the disclosure omits two antennas and two antenna switches.

### Embodiment 2

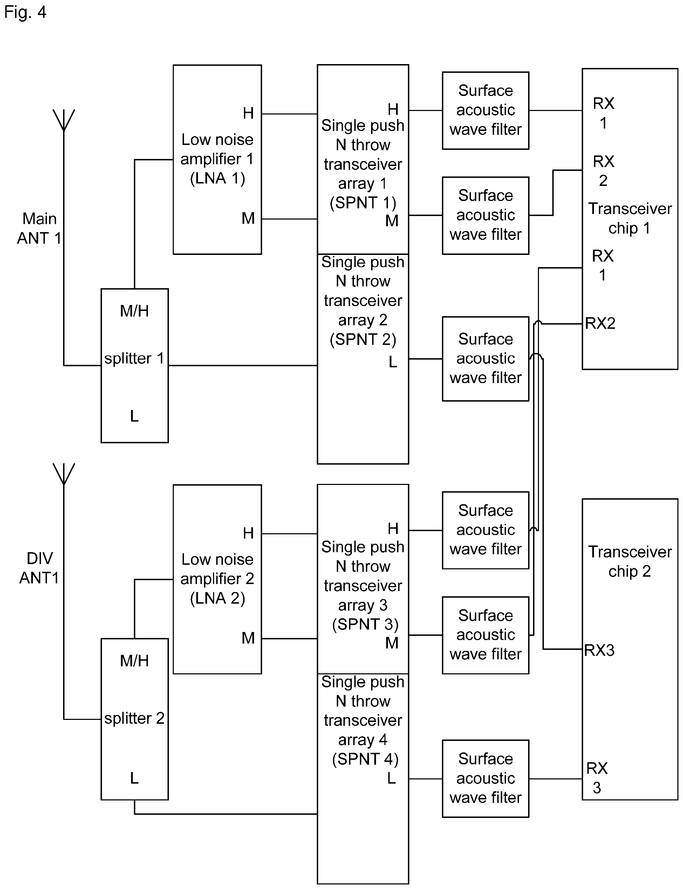

Fig. 4 is another structural diagram of a carrier aggregation device of the disclosure. Compared with Fig. 3, in Fig. 4, the diplexer 3 and the diplexer 4 are replaced by a LNA 1 and a LNA 2, while the other parts are the same and thus use the same reference signs as those in Fig. 3.

A signal enters a carrier aggregation device through transceiver antennas (Main ANT and DIV ANT), and then enters a radio-frequency transceiver chip through a radio-frequency front end. The radio-frequency front end includes a diplexer, an antenna switch and a filter. As shown in Fig. 4, a signal, after entering through the Main ANT, is split into a low frequency signal, and an intermediate and high frequency mixed signal through a diplexer 1. The low frequency signal is directly connected to a low frequency signal receiving port (port L) of a SPNT2. The intermediate and high frequency mixed signal is split into a high frequency signal and a low frequency signal through the LNA 1. Then, the two signals are connected to a high frequency receiving port (port H) and a low frequency receiving port (port M) of a SPNT 1 respectively. Thus, the signal, passing through the Main ANT, is finally split into three signals (a low frequency signal, an intermediate frequency signal and a high frequency signal). The three signals, after clutter filtering process by the filter, enter a high frequency receiving port (Rx1), an intermediate frequency receiving port (Rx2) of the transceiver 1 and a low frequency receiving port (Rx3) of the transceiver 2 respectively.

Similarly, a signal, after entering the DIV ANT, is split into a low frequency signal, and an intermediate and high frequency mixed signal through the diplexer 2. The low frequency signal is directly connected to a low frequency signal receiving port (port L) of a SPNT4. The intermediate and high frequency mixed signal is split into a high frequency signal and a low frequency signal through the LNA 2. Then, the two signals are connected to a high frequency receiving port (port H) and a low frequency receiving port (port M) of the SPNT 3 respectively. Thus, the signal, passing through the Main ANT, is finally split into three signals (a low frequency signal, an intermediate frequency signal and a high frequency signal). The three signals, after clutter filtering process by the filter, enter a high frequency receiving port (Rx1), an intermediate frequency receiving port (Rx2) of the transceiver 1 and a low frequency receiving port (Rx3) of the transceiver 2 respectively.

In the embodiment, the LNA 1 and the LNA 2 are LNAs having a characteristic of double-output, for the purpose of dividing an intermediate and high frequency signal into two signals which enter two receiving channels respectively, to ensure that the intermediate and high frequency bands are multiplexed in one channel to implement the carrier aggregation function of low, intermediate and high frequency bands. Compared with the related art, the solution of the disclosure omits two antennas and two antenna switches.

It is to be noted that, although the embodiment 1 and the embodiment 2 use four SPNT transceiver arrays as transceiver antennas, the number of the SPNT is not limited in practical application, which can be one or multiple, as long as there are two low frequency signal receiving ports, two intermediate frequency signal receiving ports and two high frequency signal receiving ports. Similarly, the number of the radio-frequency transceiver chip is not limited, as long as there are a corresponding number and corresponding function of receiving ports.

The above are only the preferred embodiments of the disclosure, and not intend to limit the scope of protection of the disclosure.

## Claims

1. A carrier aggregation device comprising: a first transceiver antenna (21), a second transceiver antenna (22), a first radio-frequency front end (23), a second radio-frequency front end (24) and a radio-frequency transceiver chip (25); wherein a signal received by the first transceiver antenna (21) is split, through the first radio-frequency front end (23), into a first high frequency signal, a first intermediate frequency signal and a first low frequency signal, which enter the radio-frequency transceiver chip (25) separately; and wherein a signal received by the second transceiver antenna (22) is split, through the second radio-frequency front end (24), into a second high frequency signal, a second intermediate frequency signal and a second low frequency signal, which enter the radio-frequency transceiver chip (25) separately,
the first radio-frequency front end (23) comprising: a first duplexer connected to the first transceiver antenna (21); the first duplexer is arranged to split the signal, received from the first transceiver antenna (21), into a first signal including the first low frequency signal and a second signal including the first intermediate frequency signal and the first high frequency signal; and
the second radio-frequency front end (24) comprises: a second duplexer connected to the second transceiver antenna (22); the second duplexer is arranged to split the signal, received from the second transceiver antenna (22), into a third signal including the second low frequency signal and a fourth signal including the second intermediate frequency signal and the second high frequency signal, said carrier aggregation device being **characterized in that**
the first radio-frequency front end (23) further comprises: a first energy diversity device and a first antenna switch; a low frequency output end of the first duplexer is connected to a low frequency receiving port of the first antenna switch; intermediate and high frequency output ends of the first duplexer are connected to the first antenna switch through the first energy diversity device; the first energy diversity device is arranged to receive the second signal sent by the first duplexer, execute frequency division processing on the second signal and send two signals obtained after the frequency division processing on the second signal to the first antenna switch; and
the second radio-frequency front end (24) further comprises: a second energy diversity device and a second antenna switch; a low frequency output end of the second duplexer is connected to a low frequency receiving port of the second antenna switch; intermediate and high frequency output ends of the second duplexer are connected to the second antenna switch through the second energy diversity device; the second energy diversity device is arranged to receive the fourth signal sent by the second duplexer, execute frequency division processing on the fourth signal and send two signals obtained after the frequency division processing on the fourth signal to the second antenna switch.

2. The device according to claim 1, wherein the first energy diversity device is arranged to split the received second signal into a fifth signal including an intermediate frequency and a sixth signal including a high frequency; and the second energy diversity device is arranged to split the received fourth signal into a seventh signal including an intermediate frequency and an eighth signal including a high frequency.

3. The device according to claim 1, wherein a high frequency output end of the first energy diversity device is connected to a high frequency receiving port of the first antenna switch; and an intermediate frequency output end of the first energy diversity device is connected to an intermediate frequency receiving port of the first antenna switch; and
a high frequency output end of the second energy diversity device is connected to a high frequency receiving port of the second antenna switch; and an intermediate frequency output end of the second energy diversity device is connected to an intermediate frequency receiving port of the second antenna switch.

4. The device according to claim 2, wherein, the first energy diversity device is a diplexer or a low noise amplifier, LNA; and the second energy diversity device is a diplexer or a LNA.

5. The device according to claim 4, wherein, the first radio-frequency front end (23) further comprises: a first filter, a second filter and a third filter;
the first signal, after passing through the first antenna switch, passes through the first filter for clutter filtering and then is output to the radio-frequency transceiver chip (25);
the fifth signal, after passing through the first antenna switch, passes through the second filter for clutter filtering and then is output to the radio-frequency transceiver chip (25);
the sixth signal, after passing through the first antenna switch, passes through the third filter for clutter filtering and then is output to the radio-frequency transceiver chip (25);
the second radio-frequency front end further comprises: a fourth filter, a fifth filter and a sixth filter;
the third signal, after passing through the second antenna switch, passes through the fourth filter for clutter filtering and then is output to the radio-frequency transceiver chip (25);
the seventh signal, after passing through the second antenna switch, passes through the fifth filter for clutter filtering and then is output to the radio-frequency transceiver chip (25); and
the eighth signal, after passing through the second antenna switch, passes through the sixth filter for clutter filtering and then is output to the radio-frequency transceiver chip (25).

## Patentansprüche

1. Trägeraggregationsvorrichtung, umfassend: eine erste Sender-Empfänger-Antenne (21), eine zweite Sender-Empfänger-Antenne (22), ein erstes Funkfrequenz-Frontende (23), ein zweites Funkfrequenz-Frontende (24) und einen Funkfrequenz-Sender-Empfänger-Chip (25); wobei
ein von der ersten Sender-Empfänger-Antenne (21) empfangenes Signal über das erste Funkfrequenz-Frontende (23) in ein erstes Hochfrequenzsignal, ein erstes Zwischenfrequenzsignal und ein erstes Niederfrequenzsignal aufgeteilt wird, die getrennt in den Funkfrequenz-Sender-Empfänger-Chip (25) eingehen; und wobei
ein von der zweiten Sender-Empfänger-Antenne (22) empfangenes Signal über das zweite Funkfrequenz-Frontende (24) in ein zweites Hochfrequenzsignal, ein zweites Zwischenfrequenzsignal und ein zweites Niederfrequenzsignal aufgeteilt wird, die getrennt in den Funkfrequenz-Sender-Empfänger-Chip (25) eingehen,
wobei das erste Funkfrequenz-Frontende (23) umfasst: einen ersten Duplexer, der an die erste Sender-Empfänger-Antenne (21) angeschlossen ist; wobei der erste Duplexer angeordnet ist, um das von der ersten Sender-Empfänger-Antenne (21) empfangene Signal in ein erstes Signal, das das erste Niederfrequenzsignal beinhaltet, und ein zweites Signal, das das erste Zwischenfrequenzsignal und das erste Hochfrequenzsignal beinhaltet, aufzuteilen; und
das zweite Funkfrequenz-Frontende (24) umfasst: einen zweiten Duplexer, der an die zweite Sender-Empfänger-Antenne (22) angeschlossen ist; wobei der zweite Duplexer angeordnet ist, um das von der zweiten Sender-Empfänger-Antenne (22) empfangene Signal in ein drittes Signal, das das zweite Niederfrequenzsignal beinhaltet, und ein viertes Signal, das das zweite Zwischenfrequenzsignal und das zweite Hochfrequenzsignal beinhaltet, aufzuteilen, wobei die Trägeraggregationsvorrichtung
**dadurch gekennzeichnet ist, dass**
das erste Funkfrequenz-Frontende (23) weiter umfasst: eine erste Energievielfaltvorrichtung und einen ersten Antennenschalter; ein Niederfrequenz-Ausgabeende des ersten Duplexers ist an einen Niederfrequenz-Empfangsanschluss des ersten Antennenschalters angeschlossen; Zwischen- und Hochfrequenz-Ausgabeenden des ersten Duplexers sind über die erste Energievielfaltvorrichtung an den ersten Antennenschalter angeschlossen; die erste Energievielfaltvorrichtung ist angeordnet, um das zweite, vom ersten Duplexer gesendete Signal zu empfangen, Frequenzteilungsverarbeitung am zweiten Signal durchzuführen und zwei nach der Frequenzteilungsverarbeitung am zweiten Signal erhaltene Signale zum ersten Antennenschalter zu senden; und
das zweite Funkfrequenz-Frontende (24) weiter umfasst: eine zweite Energievielfaltvorrichtung und einen zweiten Antennenschalter; ein Niederfrequenz-Ausgabeende des zweiten Duplexers ist an einen Niederfrequenz-Empfangsanschluss des zweiten Antennenschalters angeschlossen; Zwischen- und Hochfrequenz-Ausgabeenden des zweiten Duplexers sind über die zweite Energievielfaltvorrichtung an den zweiten Antennenschalter angeschlossen; die zweite Energievielfaltvorrichtung ist angeordnet, um das vierte, vom zweiten Duplexer gesendete Signal zu empfangen, Frequenzteilungsverarbeitung am vierten Signal durchzuführen und zwei nach der Frequenzteilungsverarbeitung am vierten Signal erhaltene Signale zum zweiten Antennenschalter zu senden.

2. Vorrichtung nach Anspruch 1, wobei die erste Energievielfaltvorrichtung angeordnet ist, um das empfangene zweite Signal in ein fünftes Signal, das eine Zwischenfrequenz beinhaltet, und ein sechstes Signal, das eine Hochfrequenz beinhaltet, aufzuteilen; und die zweite Energievielfaltvorrichtung angeordnet ist, um das empfangene vierte Signal in ein siebtes Signal, das eine Zwischenfrequenz beinhaltet, und ein achtes Signal, das eine Hochfrequenz beinhaltet, aufzuteilen.

3. Vorrichtung nach Anspruch 1, wobei ein Hochfrequenz-Ausgabeende der ersten Energievielfaltvorrichtung an einen Hochfrequenz-Empfangsanschluss des ersten Antennenschalters angeschlossen ist; und ein Zwischenfrequenz-Ausgabeende der ersten Energievielfaltvorrichtung an einen Zwischenfrequenz-Empfangsanschluss des ersten Antennenschalters angeschlossen ist; und
ein Hochfrequenz-Ausgabeende der zweiten Energievielfaltvorrichtung an einen Hochfrequenz-Empfangsanschluss des zweiten Antennenschalters angeschlossen ist; und ein Zwischenfrequenz-Ausgabeende der zweiten Energievielfaltvorrichtung an einen Zwischenfrequenz-Empfangsanschluss des zweiten Antennenschalters angeschlossen ist.

4. Vorrichtung nach Anspruch 2, wobei die erste Energievielfaltvorrichtung ein Diplexer oder ein rauscharmer Verstärker (Low Noise Amplifier), LNA ist; und die zweite Energievielfaltvorrichtung ein Diplexer oder ein LNA ist.

5. Vorrichtung nach Anspruch 4, wobei das erste Funkfrequenz-Frontende (23) weiter umfasst: einen ersten Filter, einen zweiten Filter und einen dritten Filter;
das erste Signal, nachdem es den ersten Antennenschalter durchlaufen hat, den ersten Filter zur Entstörungsfilterung durchläuft und dann an den Funkfrequenz-Sender-Empfänger-Chip (25) ausgegeben wird;
das fünfte Signal, nachdem es den ersten Antennenschalter durchlaufen hat, den zweiten Filter zur Entstörungsfilterung durchläuft und dann an den Funkfrequenz-Sender-Empfänger-Chip (25) ausgegeben wird;
das sechste Signal, nachdem es den ersten Antennenschalter durchlaufen hat, den dritten Filter zur Entstörungsfilterung durchläuft und dann an den Funkfrequenz-Sender-Empfänger-Chip (25) ausgegeben wird;
das zweite Funkfrequenz-Frontende weiter umfasst: einen vierten Filter, einen fünften Filter und einen sechsten Filter;
das dritte Signal, nachdem es den zweiten Antennenschalter durchlaufen hat, den vierten Filter zur Entstörungsfilterung durchläuft und dann an den Funkfrequenz-Sender-Empfänger-Chip (25) ausgegeben wird;
das siebte Signal, nachdem es den zweiten Antennenschalter durchlaufen hat, den fünften Filter zur Entstörungsfilterung durchläuft und dann an den Funkfrequenz-Sender-Empfänger-Chip (25) ausgegeben wird;
das achte Signal, nachdem es den zweiten Antennenschalter durchlaufen hat, den sechsten Filter zur Entstörungsfilterung durchläuft und dann an den Funkfrequenz-Sender-Empfänger-Chip (25) ausgegeben wird.

## Revendications

1. Dispositif d'agrégation de porteuses comprenant : une première antenne émettrice-réceptrice (21), une seconde antenne émettrice-réceptrice (22), un premier frontal radiofréquence (23), un second frontal radiofréquence (24) et une puce émettrice-réceptrice radiofréquence (25) ;
dans lequel un signal reçu par la première antenne émettrice-réceptrice (21) est divisé, par l'intermédiaire du premier frontal radiofréquence (23), en un premier signal haute fréquence, un premier signal de fréquence intermédiaire et un premier signal basse fréquence qui entrent séparément dans la puce émettrice-réceptrice radiofréquence (25) ; et dans lequel
un signal reçu par la seconde antenne émettrice-réceptrice (22) est divisé, par l'intermédiaire du second frontal radiofréquence (24), en un second signal haute fréquence, un second signal de fréquence intermédiaire et un second signal basse fréquence, qui entrent séparément dans la puce émettrice-réceptrice radiofréquence (25),
le premier frontal radiofréquence (23) comprenant : un premier duplexeur connecté à la première antenne émettrice-réceptrice (21); le premier duplexeur est conçu pour diviser le signal, reçu de la première antenne émettrice-réceptrice (21), en un premier signal comportant le premier signal basse fréquence et un deuxième signal comportant le premier signal de fréquence intermédiaire et le premier signal haute fréquence ; et
le second frontal radiofréquence (24) comprend : un second duplexeur connecté à la seconde antenne émettrice-réceptrice (22) ; le second duplexeur est conçu pour diviser le signal, reçu de la seconde antenne émettrice-réceptrice (22), en un troisième signal comportant le second signal basse fréquence et un quatrième signal comportant le second signal de fréquence intermédiaire et le second signal haute fréquence, ledit dispositif d'agrégation de porteuses étant **caractérisé en ce que**
le premier frontal radiofréquence (23) comprend en outre ; un premier dispositif de diversité d'énergie et un premier commutateur d'antenne ; une extrémité de sortie basse fréquence du premier duplexeur est connectée au port de réception basse fréquence du premier commutateur d'antenne ; les extrémités de sortie de fréquence intermédiaire et haute fréquence du premier duplexeur sont connectées au premier commutateur d'antenne par l'intermédiaire du premier dispositif de diversité d'énergie ; le premier dispositif de diversité d'énergie est conçu pour recevoir le deuxième signal envoyé par le premier duplexeur, exécuter le traitement de répartition en fréquence sur le deuxième signal et envoyer deux signaux obtenus après le traitement de répartition en fréquence sur le deuxième signal au premier commutateur d'antenne ; et
le second frontal radiofréquence (24) comprend en outre : un second dispositif de diversité d'énergie et un second commutateur d'antenne ; une extrémité de sortie basse fréquence du second duplexeur est connectée à un port de réception basse fréquence du second commutateur d'antenne ; les extrémités de sortie de fréquence intermédiaire et haute fréquence du second duplexeur sont connectées au second commutateur d'antenne par l'intermédiaire du second dispositif de diversité d'énergie ; le second dispositif de diversité d'énergie est conçu pour recevoir le quatrième signal envoyé par le second duplexeur, exécuter le traitement de répartition en fréquence sur le quatrième signal et envoyer deux signaux obtenus après le traitement de répartition en fréquence sur le quatrième signal au second commutateur d'antenne.

2. Dispositif selon la revendication 1, dans lequel le premier dispositif de diversité d'énergie est conçu pour diviser le deuxième signal reçu en un cinquième signal comportant une fréquence intermédiaire et un sixième signal comportant une haute fréquence ; et le second dispositif de diversité d'énergie est conçu pour diviser le quatrième signal reçu en un septième signal comportant une fréquence intermédiaire et un huitième signal comportant une haute fréquence.

3. Dispositif selon la revendication 1, dans lequel une extrémité de sortie haute fréquence du premier dispositif de diversité d'énergie est connectée à un port de réception haute fréquence du premier commutateur d'antenne ; et une extrémité de sortie de fréquence intermédiaire du premier dispositif de diversité d'énergie est connectée à un port de réception de fréquence intermédiaire du premier commutateur d'antenne ; et
une extrémité de sortie haute fréquence du second dispositif de diversité d'énergie est connectée à un port de réception haute fréquence du second commutateur d'antenne ; et une extrémité de sortie de fréquence intermédiaire du second dispositif de diversité d'énergie est connectée à un port de réception de fréquence intermédiaire du second commutateur d'antenne.

4. Dispositif selon la revendication 2, dans lequel le premier dispositif de diversité d'énergie est un diplexeur ou un amplificateur à faible bruit, LNA ; et le second dispositif de diversité d'énergie est un diplexeur ou un LNA.

5. Dispositif selon la revendication 4, dans lequel le premier frontal radiofréquence (23) comprend en outre : un premier filtre, un deuxième filtre et un troisième filtre ;
le premier signal, après passage à travers le premier commutateur d'antenne, passe à travers le premier filtre pour filtrage de fouillis et puis est produit en sortie vers la puce émettrice-réceptrice radiofréquence (25) ;
le cinquième signal, après passage à travers le premier commutateur d'antenne, passe à travers le deuxième filtre pour filtrage de fouillis et puis est produit en sortie vers la puce émettrice-réceptrice radiofréquence (25) ;
le sixième signal, après passage à travers le premier commutateur d'antenne, passe à travers le troisième filtre pour filtrage de fouillis et puis est produit en sortie vers la puce émettrice-réceptrice radiofréquence (25) ;
le second frontal radiofréquence comprend en outre : un quatrième filtre, un cinquième filtre et un sixième filtre ;
le troisième signal, après passage à travers le second commutateur d'antenne, passe à travers le quatrième filtre pour filtrage de fouillis et puis est produit en sortie vers la puce émettrice-réceptrice radiofréquence (25) ;
le septième signal, après passage à travers le second commutateur d'antenne, passe à travers le cinquième filtre pour filtrage de fouillis, et puis est produit en sortie vers la puce émettrice-réceptrice radiofréquence (25) ; et
le huitième signal, après passage à travers le second commutateur d'antenne, passe à travers le sixième filtre pour filtrage de fouillis et puis est produit en sortie vers la puce émettrice-réceptrice radiofréquence (25).
